# EUROPEAN PATENT SPECIFICATION

(11) **EP 1 819 638 B1**
(45) Date of publication and mention of the grant of the patent: **23.04.2008**
(21) Application number: 05788307.6
(22) Date of filing: 22.09.2005
(51) Int. Cl.: C01G 45/06

(54) **METHOD OF MANUFACTURING MANGANESE TETRAFLUORIDE**
VERFAHREN ZUR HERSTELLUNG VON MANGANTETRAFLUORID
PROCÉDÉ DE FABRICATION DE TÉTRAFLUORURE DE MANGANÈSE

(30) Priority: 23.09.2004 RU 2004128382
(43) Date of publication of application: 22.08.2007
(73) Proprietor: Astor Electronics JSC, St. Petersburg, 198328 (RU); SHOWA DENKO KABUSHIKI KAISHA, Tokyo 105-8518 (JP)
(72) Inventor: TORISU, Junichi, c/o SHOWA DENKO K.K., Kawasaki-shi, Kanagawa 210-0867 (JP); OKA, Masakazu, c/o SHOWA DENKO K.K., Kawasaki-shi, Kanagawa 210-0867 (JP); KUZNETSOV, Andrey Sergeyevich, St.Petersburg 197349 (RU); PETROV, Yury Alexeyevich, St. Petersburg 198328 (RU)
(74) Representative: Strehl Schübel-Hopf & Partner
(86) International application number: PCT/JP2005/018205
(87) International publication number: WO 2006/033480

(56) References cited:
- MAZEJ Z: "Room temperature syntheses of MnF3, MnF4 and hexafluoromanganete(IV) salts of alkali cations" JOURNAL OF FLUORINE CHEMISTRY, ELSEVIER SEQUOIA, LAUSANNE, CH, vol. 114, no. 1, 28 March 2002 (2002-03-28), pages 75-80, XP004344321 ISSN: 0022-1139
- R. HOPPE ET AL: "Manganese tetrafluoride" ANGEWANDTE CHEMIE INTERNATIONAL EDITION, vol. 2, no. 4, 1963, page 222, XP002358210
- DATABASE CA [Online] CHEMICAL ABSTRACTS SERVICE, COLUMBUS, OHIO, US; RAKOV, E. G. ET AL: "Synthesis of manganese tetrafluoride at atmospheric pressure" XP002358235 retrieved from STN Database accession no. 129:22446 cited in the application & ZHURNAL NEORGANICHESKOI KHIMII , 43(4), 533-537 CODEN: ZNOKAQ; ISSN: 0044-457X, 1998,

## Description

### TECHNICAL FIELD

This invention relates to inorganic chemistry and a method of manufacturing a manganese compound and more particularly to a method of manufacturing a halogenated product thereof, i.e. a method of manufacturing manganese tetrafluoride, MnF₄.

### BACKGROUND ART

Manganese tetrafluoride is used in the chemical industry as a strong oxidizing agent and as a source of manufacture for pure fluorine. As regards manganese tetrafluoride, for example, there is known a method of manufacturing fluorine [Russian Federation Patent 2,221,739, Class C01B 7/20, Date of Publication: April 1, 2004]. This method employs as starting compounds, for example, salts having a high fluorine content (potassium hexafluoride, KF₆ and manganese tetrafluoride, MnF₄) and other salts, such as K₃NiF₇, K₂NiF₆ and K₂CuF₆ and compounds similar to them.

There is also known a method of manufacturing MnF₄ which employs terbium tetrafluoride as a fluorinating agent and performs the fluorination of MnF₂ by condensing a vapor product obtained at a high temperature (380 - 460°C) under a pressure of 10⁻¹ to 10⁻⁵ torr [Soviet Union Inventor Certificate 1,428,702, Class C01G 45/06, Date of Publication: October 7, 1988]. Such use of a fluorinating agent makes the separation of a product difficult and brings about an increase of cost.

There is also a description concerning a method of manufacturing manganese tetrafluoride, including a method of manufacture from manganese difluoride and manganese trifluoride [Russian Journal of Inorganic Chemistry, Vol. 43, No. 4, 1998, pp. 465-469, Synthesis of Manganese Tetrafluoride at Atmospheric Pressure]. This description shows that a method of manufacture from manganese trifluoride has an advantage. This method is carried out in a reactor having a cooling device in its inside and a solid product is formed around the cooling device. A starting substance (MnF₃) in the form of tablets in the amount of about 90 to 120 g is placed in a heating region around the cooling device. Fluorination takes place at a temperature of 450 - 700°C and fluorine feed rate of 3.2 - 12. 6 g/h. For continuing fluorination, the product which has been formed is shaken off into a collector every five minutes by a vibration method or by using a cylinder type scraper, whereby a grayish blue powder of manganese tetrafluoride is obtained.

There is a method of obtaining MnF₄ as an intermediate product by the synthesis of fluorine gas [Soviet Union Inventor Certificate 1,432,001, Class C01G 45/06, Publication Number: 1,932,001]. It describes the stage of preparing MnF₄ from manganese trifluoride, MnF₃. Manganese trifluoride is fluorinated by industrial fluorine at a temperature of 450 - 650°C and the resulting manganese tetrafluoride is condensed at (70°C or less). When MnF₄ is used, fluorine gas is obtained in accordance with the following reaction formula:

MnF₄ → MnF₃ + ½F₂

The above patent describes a method of manufacture which obtains MnF₄ by interacting MnF₃ in a gas stream containing fluorine at a temperature of 450 - 650°C to sublimate MnF₄ and condensing its vapor at a temperature of 70°C or below. Then, the manganese tetrafluoride as obtained is heated to 70 - 300°C so that fluorine gas of high purity may be obtained. Drawbacks of this method lie in a low conversion to MnF₄ and the necessity for complicated equipment for sublimation by heating and collection for the synthesis of MnF₄. Another drawback thereof lies in that the necessity of carrying out processes for sublimation and condensation makes it difficult to organize commercial production.

We have made an attempt to synthesize MnF₄ by reacting MnF₂ with fluorine gas without sublimating MnF₄. This attempt has, however, ended in the melting and vitrification of the compound. Thus, it has been confirmed that it is impossible to obtain MnF₄ by a simple process as in the past.

It has been found during the process of work that the fluorination of the starting manganese salt proceeds on the surfaces of its particles and is accompanied by the sintering of the particles which obstructs the penetration of fluorine into the particles.

We, the inventors of this proposed invention, have found it necessary to solve the object of carrying out the method in a manner ensuring the complete fluorination of the salt, or the problem of having fluorine penetrate into the deepest possible interior of the particles. This object is attained by a method including grinding any starting compound and solid particles under reaction.

### DISCLOSURE OF THE INVENTION

The method of manufacturing manganese tetrafluoride according to the present invention is characterized by reacting a manganese compound and a fluorinating agent at a temperature of 250 - 350°C and a pressure of 1.0 - 10.0 MPa to fluorinate the compound, while constantly or discontinuously crushing or grinding the starting compound and the manganese compound being reacted.

The starting compound and the manganese compound being reacted are crushed or ground constantly or discontinuously in a reactor without being removed therefrom.

The starting compound and the manganese compound being reacted are crushed or ground constantly or discontinuously in a ball mill or a rod mill in a reactor without being removed from the reactor.

As the starting compound, one or more divalent manganese compounds selected from the group consisting of MnF₂, MnF₂ hydrate, MnCl₂, MnCO₃ and MnO are used.

The starting compound preferably comprises MnF₂ and/or its hydrate.

The fluorinating agent comprises one or more substances selected from among F₂, CIF and ClF₃.

The fluorinating agent preferably comprises F₂.

The starting compound is pre-treated with an inert gas having a dew point of -40°C or below at a temperature of 100 - 400°C.

### BRIEF DESCRIPTION OF THE DRAWINGS

Fig. 1 is a schematic diagram showing a testing apparatus using a batch type reactor.
Fig. 2 is an enlarged view showing the batch type reactor in the testing apparatus of Fig. 1.
Fig. 3 is a schematic diagram showing a testing apparatus using a reactor with ball mill.
Fig. 4 is an enlarged view showing the reactor with ball mill in the testing apparatus of Fig. 3.

### BEST MODE FOR CARRYING OUT THE INVENTION

This invention is essentially characterized by not relying upon sublimation at a high temperature and the cooling and condensation of a product thereof for the fluorination of a manganese compound by a fluorinating agent, but performing its fluorination in its solid form at a temperature of 250 - 350°C and a pressure of 1.0 - 10.0 MPa, while grinding the starting compound and reaction product constantly or discontinuously. This method is characterized by treating the starting manganese compound with an inert gas having a dew point of -40°C or below, preferably -60°C or below at a temperature of 100 - 400°C, preferably 150 - 350°C before or while the method is carried out. This method is preferably carried out in a reactor containing a grinding apparatus, for example, a ball mill or a rod mill.

In connection with this invention, we express the composition of the intended compound as MnF₄, but as this compound usually partially contains an intermediate product from MnF₂ to MnF₄ and a dimmer thereof, its general composition is expressed as MnFₓ (x = 3.5 - 4).

According to this invention relating to a method of manufacturing MnF₄, it is possible to use as the manganese compound a commercially available divalent manganese compound, such as MnF₂, MnCl₂, MnCO₃ or MnO. It is desirable to use first MnF₂ as no removal of anions is necessary, and then MnCO₃ in view of reactivity. The use of a hydrate of a manganese compound is also permissible, but is likely to form HF as a by-product. In order to avoid this, it is necessary to treat it with an inert gas having a dew point of -40°C or below at a temperature of 150 - 350°C. This makes it possible to prevent the formation of a sintered product and thereby improve the speed and ratio of conversion to MnF₄. Even when anhydrous MnF₂ is used, for example, it is desirable to dry it before using it, since it contains a small amount of water.

Although no particular requirement is made as to the purity of MnF₂, an excessively high percentage of impurities is likely to hinder fluorination. While a purity of 90% or above is, for example, considered satisfactory, a purity of 95% or above is more desirable and the optimum purity is 97% or above. The same is true with the purity of the fluorinating agent. Although no particular requirement is made, either, when, for example, F₂ is used as the fluorinating agent, a purity of 95% or above is acceptable, a purity of 99% or above is more desirable and the optimum purity is 99.9% or above.

As to the particle diameter of MnF₂, it is desirable to use particles having an average particle diameter of 0.4 mm or less, more desirably an average particle diameter of 100 µm or less and most desirably 10 µm or less, considering that the efficiency of fluorination depends on the surface area, and the surface area increases in inverse proportion to the particle diameter.

It is necessary to point out that MnF₂ is often synthesized from MnCO₃ and HF on a commercial basis (MnCO₃ + 2HF → MnF₂ + CO₂ + H₂O). The use of anhydrous MnF₂ obtained by this method is recommended for the manufacture of MnF₄. This makes possible a reduction in the cost of production.

For example, MnF₂ obtained by taking the above factor into account is placed in a reaction vessel for preliminary drying. Its drying treatment is carried out for removing water of crystallization remaining from the process for MnF₂ manufacture and water adhering to the surfaces of MnF₂ crystals. Its drying is carried out as described below. Its water is removed by heating MnF₂ at a low pressure. The efficient removal of water is achieved by repeating a cycle including interrupting a reduction of the pressure - purging with an inert gas (e.g. He) having a dew point of -40°C or below and thereby raising the pressure - reducing the pressure again. While the percentage of water removal is improved with the number of times the cycle is repeated, five to ten times are usually sufficient for water removal. While a temperature of 100°C is considered satisfactory for the purpose, a temperature of 300 - 400°C makes drying more efficient.

One or more substances selected from among F₂, ClF and ClF₃ can be used as the fluorinating agent (or agents). Among these, a fluorinating agent containing F₂ is preferred.

As regards the valence of manganese mentioned in connection with this invention, manganese fluoride was dissolved in an aqueous solution of nitric or hydrochloric acid, manganese was analyzed by ICP (inductively coupled plasma) spectrometry and fluorine by ion chromatography, and the ratio of manganese and fluorine in manganese fluoride was calculated.

The synthesis of MnF₄ can be performed by the operation described above. If MnF₄ as thereby obtained is heated in a nickel vessel, fluorine gas can be obtained. When the amount of impurities in the gas was measured by gas chromatography and infrared Fourier-transform spectrophotometry, a fluorine purity of 99.95% or more was confirmed.

### EXAMPLE

The present invention will be described in more detail below with reference to the following Examples, however, the present invention should not be construed as being limited to these Examples.

### Example 1

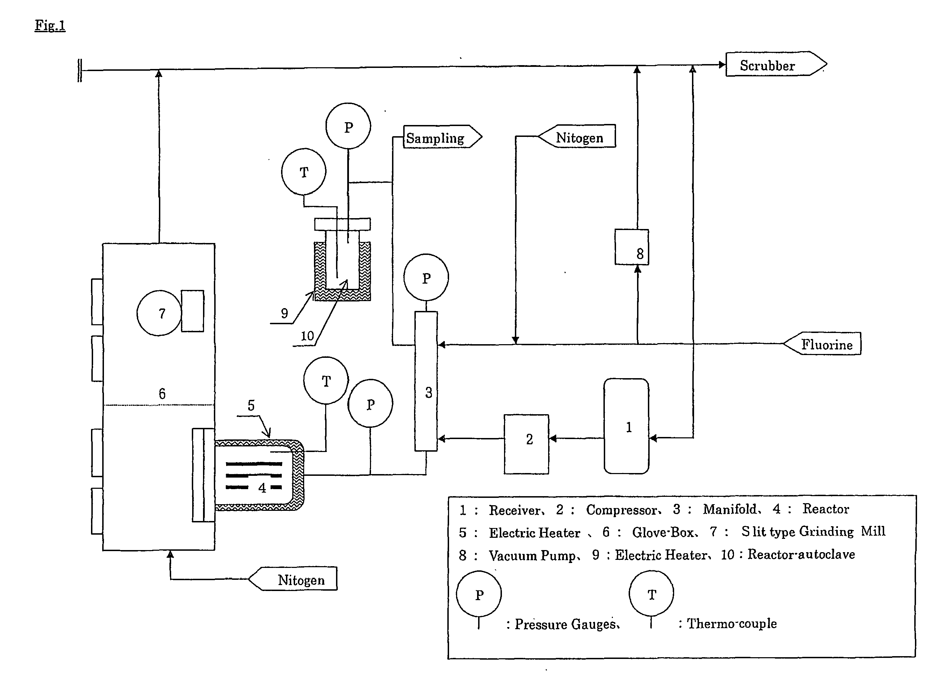

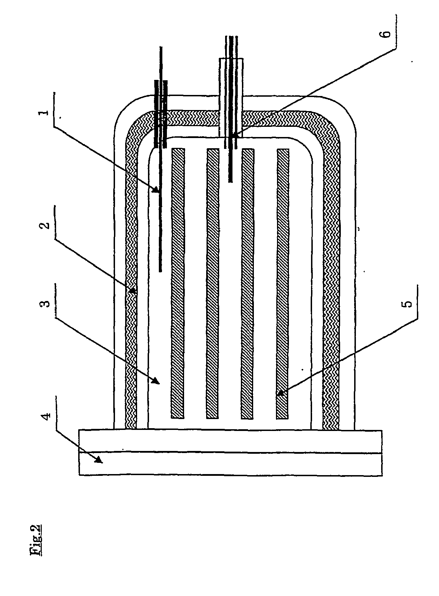

In a glove box(6) having a controlled dew point, 4500 g of manganese difluoride (MnF₂) were placed on the tray ((5) in Fig. 2) of a reactor (4) included in the structure of a testing apparatus (Fig. 1)

The reactor (4) was evacuated and supplied with fluorine gas until it had a pressure P of 2.0 MPa, and the reactor (4) was held at a temperature T of 250°C until its pressure became constant.

When its pressure P dropped less than 1.0 MPa, the reactor (4) was supplied with fluorine gas until its pressure P rose to 2.0 MPa.

The process was regarded as having been completed when the pressure P of the reactor (4) was stabilized.

After the reactor (4) was evacuated and fed with nitrogen gas until its pressure reached the ambient pressure, a product of fluorine gas treatment was taken out.

The product was weighed and the composition of each reaction product was calculated in accordance with an increase in weight.

Then, the reaction product was ground in a slit type grinding mill(7) and placed in the reactor (4), in which the fluorinating operation as described above was repeated. The composition of the final product was analyzed by ICP and ion chromatography and the composition based on weight was ascertained.

Table 1 shows the test results based on the parameters mentioned above.

**Table 1**

| Run No. | Sample weight g | Product weight g | Theoretical chemical formula of product | Chemical formula by analysis of final product |
|---|---|---|---|---|
| 1 | 4500 | 5528 | MnF_{3.15} | - |
| 2 | 5528 | 5649 | MnF_{3.25} | - |
| 3 | 5649 | 5934 | MnF_{3.56} | - |
| 4 | 5934 | 6044 | MnF_{3.68} | MnF_{3.65} |

| | | | | |
|---|---|---|---|---|
| (-: Unanalyzed) | | | | |

According to the example, the starting material and the reaction product after each run were each ground by a slit type grinding mill (7) and subj ected discontinuously to fluorine gas treatment. If each grinding timing is shown by the above run numbers, it was before 1 (the starting material was ground by a slit type grinding mill (7)), between 1 and 2, between 2 and 3, between 3 and 4 and after 4 (the final product was ground) . When fluorination treatment according to Run No. 2 was performed without any grinding done between Run Nos. 1 and 2, hardly any fluorination took place, and no MnF_{3.5} was obtained despite a long time spent.

### Examples 2 to 10

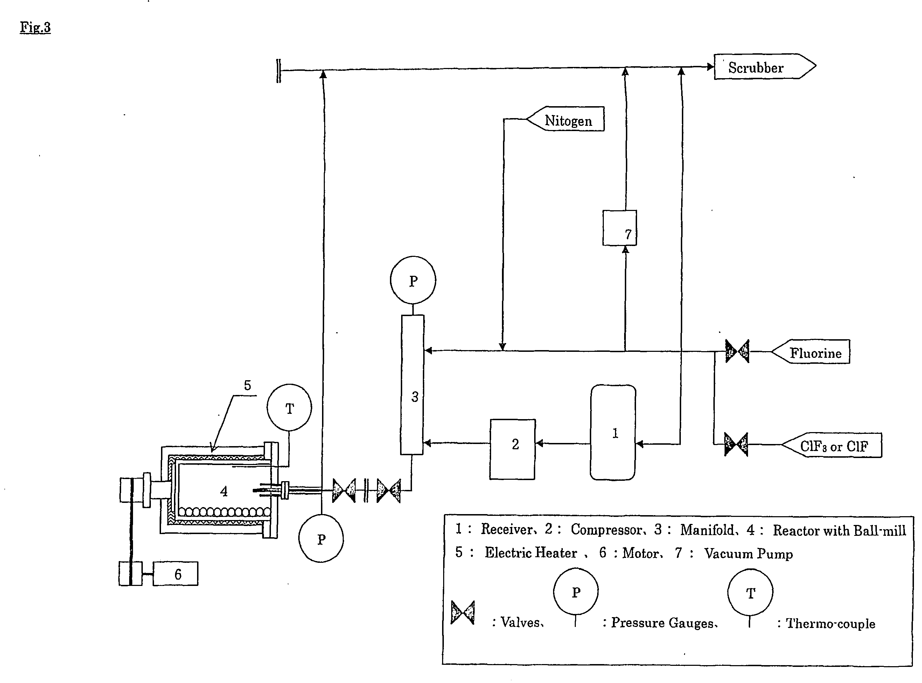

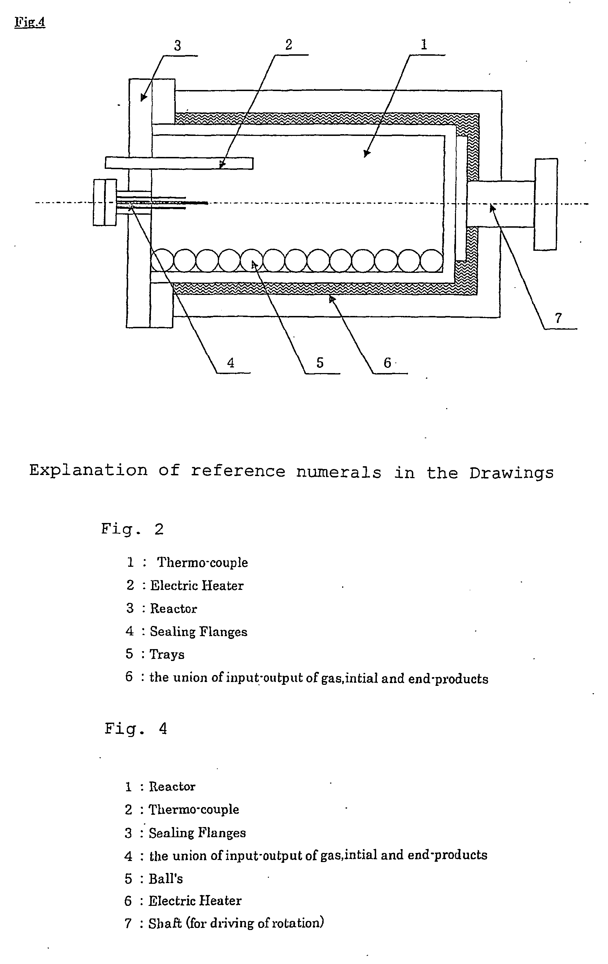

In a glove box having a controlled dew point, a reactor (4) ((1) in Fig. 4) having a ball mill and included in the structure of a testing apparatus (Fig. 3) was charged with 2500 g of manganese difluoride (MnF₂).

The reactor (4) was held until it had a constant temperature T of 250°C. The reactor (4) was evacuated and supplied with fluorine gas until it had a pressure P₁ of 2.0 MPa, and it was closed. The reactor having a ball mill (4) was rotated to carry out the reaction, while the manganese compound was crushed and ground therein.

When an occasional check of pressure indicated a pressure P₂ less than 1.0 MPa, the reactor (4) was supplied with fluorine gas until its pressure P₁ of 2.0 MPa was recovered, and it was closed.

The process was regarded as having been completed when the pressure P of the reactor (4) was stabilized.

After the reactor (4) was evacuated and fed with nitrogen gas until its pressure reached the ambient pressure, a product of fluorine gas treatment was taken out.

The product was weighed and the composition of each reaction product was calculated in accordance with an increase in weight and the results of analyses by ICP and ion chromatography.

The test results are shown in Table 2.

Table 2 also shows the results obtained by varying the temperature T and pressures P (P₁ and P₂) as the parameters. When in each example, a pressure check indicated a pressure P₂ less than X MPa, the reactor (4) was supplied with fluorine gas until its pressure P₁ rose to Y MPa, and it was closed, and its pressure range, Y-X, was 1 MPa.

**Table 2**

| Ex. | Holding Temp. T (°C) | Fluorine max. pressure P₁ (MPa) | Fluorine min. pressure P₂ (MPa) | Amount of material charged g | Weight of product g | Chemical formula of product based on weight | Chemical formula of product based analysis |
|---|---|---|---|---|---|---|---|
| 2 | 250 | 2.0 | 1.0 | 2500 | 3393 | MnF_{3.75} | MnF_{3.70} |
| 3 | 250 | 6.0 | 5.0 | 2500 | 3444 | MnF_{3.85} | MnF_{3.86} |
| 4 | 250 | 10.0 | 9.0 | 2500 | 3481 | MnF_{3.92} | MnF_{3.89} |
| 5 | 300 | 2.0 | 1.0 | 2500 | 3445 | MnF_{3.85} | MnF_{3.85} |
| 6 | 300 | 6.0 | 5.0 | 2500 | 3470 | MnF_{3.90} | MnF_{3.87} |
| 7 | 300 | 10.0 | 9.0 | 2500 | 3486 | MnF_{3.93} | MnF_{3.89} |
| 8 | 350 | 2.0 | 1.0 | 2500 | 3470 | MnF_{3.90} | MnF_{3.92} |
| 9 | 350 | 6.0 | 5.0 | 2500 | 3486 | MnF_{3.93} | MnF_{3.90} |
| 10 | 350 | 10.0 | 9.0 | 2500 | 3491 | MnF_{3.94} | MnF_{3.88} |

The reactor having a ball mill was kept rotating all the time except when it was supplied with fluorine, and when its conditions (including pressure) were checked. As is obvious from the results shown in Table 2, a higher temperature and a higher pressure tended to bring about a higher degree of fluorination. It was also found that a higher degree of fluorination than giving a composition expressed as, say, MnF_{3.7} was gradually less likely to occur.

### Examples 11 to 14

In a glove box having a controlled dew point, the reactor (4)((1) in Fig. 4) having a ball mill and included in the structure of the testing apparatus (Fig. 3) was charged with 2500g of manganese fluoride monohydrate (MnF₂·H₂O).

The reactor (4) was evacuated and supplied with fluorine gas until it had a pressure P₁ of 6.0 MPa, and it was closed. The reactor having a ball mill was rotated to carry out the reaction, while the manganese compound was crushed and ground therein, and a heater was started to hold the reactor (4) until it had a constant temperature T of 300°C.

When an occasional check of pressure indicated a pressure P₂ less than 5.0 MPa; the reactor (4) was supplied with fluorine gas until its pressure P₁ of 6.0 MPa was recovered, and it was closed.

The process was regarded as having been completed when the pressure P of the reactor (4) was stabilized.

After the reactor (4) was evacuated and fed with nitrogen gas until its pressure reached the ambient pressure, a product of fluorine gas treatment was taken out.

The product was weighed and the composition of each reaction product was calculated in accordance with an increase in weight and the results of analyses by ICP and ion chromatography.

Tests were also conducted by employing different starting materials and the results are all shown in Table 3. When in each example, a pressure check indicated a pressure P₂ less than X MPa, the reactor (4) was supplied with fluorine gas until its pressure P₁ rose to Y MPa, and it was closed, and its pressure range, Y-X, was 1 MPa.

**Table 3**

| Ex. | Starting material | Holding temp. T (°C) | Fluorine max. pressure P₁ (MPa) | Fluorine min. pressure P₂ (MPa) | Amount of charged g | Weight of product g | Chemical formula of product based on weight | Chemical formula of product based on analysis |
|---|---|---|---|---|---|---|---|---|
| 11 | MnF₂.H₂O | 250 | 6.0 | 5.0 | 2500 | 2895 | MnF_{3.87} | MnF_{3.89} |
| 12 | MnCO₃ | 250 | 10.0 | 9.0 | 2500 | 2780 | MnF_{3.90} | MnF_{3.84} |
| 13 | MnCl₂ | 250 | 10.0 | 9.0 | 2500 | 2530 | MnF_{3.65} | MnF_{3.60} |
| 14 | MnO | 250 | 10.0 | 9.0 | 2500 | 4467 | MnF_{3.78} | MnF_{3.80} |

### Examples 15 and 16

In a glove box having a controlled dew point, the reactor (4) ((1) in Fig. 4) having a ball mill and included in the structure of the testing apparatus (Fig. 3) was charged with 2500g of manganese difluoride (MnF₂).

The reactor (4) was held until it had a constant temperature T of 300°C. The reactor (4) was evacuated and supplied with chlorine trifluoride ClF₃ until it had a pressure P₁ of 2.0 MPa, and it was closed. The reactor having a ball mill was rotated to carry out the reaction, while the manganese compound was crushed and ground therein.

When an occasional check of pressure indicated a pressure P₂ less than 1.0 MPa, the reactor (4) was supplied with chlorine trifluoride until its pressure P₁ of 2.0 MPa was recovered, and it was closed.

The process was regarded as having been completed when the pressure P of the reactor (4) was stabilized.

After the reactor (4) was evacuated and fed with nitrogen gas until its pressure reached the ambient pressure, a product of fluorine gas treatment was taken out.

The product was weighed and the composition of each reaction product was calculated in accordance with an increase in weight and the results of analyses by ICP and ion chromatography.

The test results are shown in Table 4.

Table 4 also shows the results obtained by varying the fluorinating agent to chlorine fluoride CIF. When in each example, a pressure check indicated a pressure P₂ less than X MPa, the reactor (4) was supplied with the fluorinating agent until its pressure P₁ rose to Y MPa, and it was closed, and its pressure range, Y-X, was 1 MPa.

**Table 4**

| Ex. | Fluorinating Agent | Holding temp. T (°C) | Fluorinating agent max. Pressure P₁ (MPa) | Fluorinating agent min. Pressure P₂ (MPa) | Amount of sample g | Weight of product g | Chemical formula of product based on weight | Chemical formula of product based on analysis |
|---|---|---|---|---|---|---|---|---|
| 15 | CIF₃ | 300 | 2.0 | 1.0 | 2500 | 3394 | MnF_{3.75} | MnF_{3.69} |
| 16 | CIF | 300 | 6.0 | 5.0 | 2500 | 3291 | MnF_{3.55} | MnF_{3.51} |

The intermediate products including chlorine were considered to be replaced by fluorine and the products had a chlorine content which was about 1% or less of fluorine.

### Example 17

The starting material was pre-treated in an inert gas having a dew point of -40°C or below at a temperature of 100 - 400°C to have a lower content of water of crystallization before its fluorinating treatment, so that fluorine having a lower HF content might be obtained upon heating the final product (MnF₄).

In a glove box having a controlled dew point, the reactor (4) ((1) in Fig. 4) having a ball mill and included in the structure of the testing apparatus (Fig. 3) was charged with 2500g of manganese difluoride (MnF₂·nH₂O) having each of different water contents.

The reactor (4) was evacuated and while it was supplied with an inert gas having a dew point of -40°C or below, the reactor (4) had its internal temperature T held at 100 - 400°C, whereby the starting materials (MnF₂·xH₂O) having different water contents were obtained.

The reactor (4) was held until it had a constant temperature T of 300°C. The reactor (4) was evacuated and supplied with fluorine gas until it had a pressure P₁ of 6.0 MPa, and it was closed. The reactor having a ball mill was rotated to carry out the reaction, while the manganese compound was crushed and ground therein.

When an occasional check of pressure indicated a pressure P₂ less than 5.0 MPa, the reactor (4) was supplied with fluorine gas until its pressure P₁ of 6.0 MPa was recovered, and it was closed.

The process was regarded as having been completed when the pressure P of the reactor (4) was stabilized.

After the reactor (4) was evacuated and fed with nitrogen gas until its pressure reached the ambient pressure, a product of fluorine gas treatment was taken out.

The product was weighed and the composition of each reaction product was calculated in accordance with an increase in weight and the results of analyses.

Then, 450±5 g of each of the substances to be tested, as obtained by the process described above and having the general formula MnF_{3.86} or having a higher fluorine content was decomposed under heat in a decomposition reactor (10) as shown in Fig. 1.

Each substance to be tested was heated to a temperature T of 380°C so as to achieve the highest degree of fluorine decomposition.

The fluorine gas generated by the decomposition of each substance to be tested was collected in a receptacle cooled by liquid nitrogen at an absolute pressure of 273 mmHg.

After the receptacle was heated to the ambient temperature, the fluorine gas obtained by the decomposition under heat had its HF content analyzed by FT-IR.

The results are shown in Table 5.

**Table 5**

| Chemical formula of starting material | Weight before decompo⁻ sition under heat (g) | Chemical formula before decompo⁻ sition under heat | Weight after decompo⁻ sition under heat (g) | Solid after decompo⁻ sition under heat | Gas (ℓ) | Weight % of HF |
|---|---|---|---|---|---|---|
| MnF₂. 0.1H₂O | 431 | MnF_{3.89} | 372 | MnF_{2.96} | 34.8 | 0.10 |
| MnF₂. 0.15H₂O | 467 | MnF_{3.86} | 405 | MnF_{2.96} | 36.6 | 0.20 |
| MnF₂. 0.35H₂O | 480 | MnF_{3.88} | 416 | MnF_{2.97} | 37.7 | 0.60 |

Table 5 confirms that a starting material having a lower water content gives a final product generating fluorine having a lower hydrogen fluoride (HF) content.

## Claims

1. A method of manufacturing manganese tetrafluoride, **characterized by** reacting a manganese compound and a fluorinating agent at a temperature of 250 - 350°C and a pressure of 1.0 - 10.0 MPa to fluorinate the compound, while constantly or discontinuously crushing or grinding the starting compound and the manganese compound being reacted.

2. The method of manufacturing manganese tetrafluoride according to claim 1, wherein the starting compound and the manganese compound being reacted are crushed or ground constantly or discontinuously in a reactor without being removed therefrom.

3. The method of manufacturing manganese tetrafluoride according to claim 2, wherein the starting compound and the manganese compound being reacted are crushed or ground constantly or discontinuously in a ball mill or a rod mill in a reactor without being removed from the reactor.

4. The method of manufacturing manganese tetrafluoride according to any of claims 1 to 3, wherein one or more divalent manganese compounds selected from the group consisting of MnF₂, MnF₂ hydrate, MnCl₂, MnCO₃ and MnO are used as the starting compound.

5. The method of manufacturing manganese tetrafluoride according to claim 4, wherein the starting compound comprises MnF₂ and/or its hydrate.

6. The method of manufacturing manganese tetrafluoride according to any of claims 1 to 3, wherein the fluorinating agent comprises one or more substances selected from among F₂, ClF and ClF₃.

7. The method of manufacturing manganese tetrafluoride according to claim 6, wherein the fluorinating agent comprises F₂.

8. The method of manufacturing manganese tetrafluoride according to any of claims 1 to 3, wherein the starting compound is pre-treated with an inert gas having a dew point of -40°C or below at a temperature of 100 - 400°C.

## Patentansprüche

1. Verfahren zur Herstellung von Mangantetrafluorid, **gekennzeichnet durch** das Umsetzen einer Manganverbindung und eines Fluorierungsmittels bei einer Temperatur von 250-350°C und einem Druck von 1,0-10,0 MPa, um die Verbindung zu fluorieren, wobei die miteinander umgesetzte Ausgangsverbindung und Manganverbindung durchgehend oder diskontinuierlich zerkleinert oder gemahlen werden.

2. Verfahren zur Herstellung von Mangantetrafluorid nach Anspruch 1, worin die miteinander umgesetzte Ausgangsverbindung und Manganverbindung durchgehend oder diskontinuierlich in einem Reaktor zerkleinert oder gemahlen werden, ohne dass diese daraus entfernt werden.

3. Verfahren zur Herstellung von Mangantetrafluorid nach Anspruch 2, worin die miteinander umgesetzte Ausgangsverbindung und Manganverbindung durchgehend oder diskontinuierlich in einer Kugelmühle oder einer Stabmühle in einem Reaktor zerkleinert oder gemahlen werden, ohne dass diese aus dem Reaktor entfernt werden.

4. Verfahren zur Herstellung von Mangantetrafluorid nach einem der Ansprüche 1 bis 3, worin ein oder mehrere zweiwertige Manganverbindungen, ausgewählt aus der Gruppe, bestehend aus MnF₂, MnF₂-Hydrat, MnCl₂, MnCO₃ und MnO, als die Ausgangsverbindung verwendet werden.

5. Verfahren zur Herstellung von Mangantetrafluorid nach Anspruch 4, worin die Ausgangsverbindung MnF₂ und/oder dessen Hydrat enthält.

6. Verfahren zur Herstellung von Mangantetrafluorid nach einem der Ansprüche 1 bis 3, worin das Fluorierungsmittel ein oder mehrere Substanzen beinhaltet, die aus F₂, ClF und ClF₃ ausgewählt sind.

7. Verfahren zur Herstellung von Mangantetrafluorid nach Anspruch 6, worin das Fluorierungsmittel F₂ enthält.

8. Verfahren zur Herstellung von Mangantetrafluorid nach einem der Ansprüche 1 bis 3, worin die Ausgangsverbindung bei einer Temperatur von 100-400°C mit einem Inertgas, welches einen Taupunkt von -40°C oder niedriger aufweist, vorbehandelt wird.

## Revendications

1. Procédé de fabrication de tétrafluorure de manganèse, **caractérisé par** la réaction d'un composé de manganèse et d'un agent de fluoration à une température de 250-350°C et à une pression de 1,0-10,0 MPa pour fluorer le composé tout en broyant ou écrasant en continu ou en discontinu le composé de départ et le composé de manganèse qui réagissent.

2. Procédé de fabrication de tétrafluorure de manganèse selon la revendication 1, dans lequel le composé de départ et le composé de manganèse qui réagissent sont écrasés ou broyés en continu ou en discontinu dans un réacteur sans être évacués de celui-ci.

3. Procédé de fabrication de tétrafluorure de manganèse selon la revendication 2, dans lequel le composé de départ et le composé de manganèse qui réagissent sont écrasés ou broyés en continu ou en discontinu dans un broyeur à billes ou dans un broyeur à barres dans un réacteur sans être évacués du réacteur.

4. Procédé de fabrication de tétrafluorure de manganèse selon l'une quelconque des revendications 1 à 3, dans lequel un ou plusieurs composés divalents du manganèse choisis parmi MnF₂, un hydrate de MnF₂, MnCl₂, MnCO₃ et MnO sont utilisés comme composés de départ.

5. Procédé de fabrication de tétrafluorure de manganèse selon la revendication 4, dans lequel le composé de départ comprend MnF₂ et/ou son hydrate.

6. Procédé de fabrication de tétrafluorure de manganèse selon l'une quelconque des revendications 1 à 3, dans lequel l'agent de fluoration comprend une ou plusieurs substances choisies parmi F₂, ClF et ClF₃.

7. Procédé de fabrication de tétrafluorure de manganèse selon la revendication 6, dans lequel l'agent de fluoration comprend F₂.

8. Procédé de fabrication de tétrafluorure de manganèse selon l'une quelconque des revendications 1 à 3, dans lequel le composé de départ est prétraité avec un gaz inerte présentant un point de rosée de -40°C ou inférieur à une température de 100-400°C.
